(19) Europäisches Patentamt
European Patent Office
Office européen des brevets

(11) Publication number: 0 236 119 B1

# (12) EUROPEAN PATENT SPECIFICATION

(45) Date of publication of the patent specification: 19.09.90

(51) Int. Cl.[5]: A01N 43/80 // (A01N43/80, 37:44)

(21) Application number: 87301835.2

(22) Date of filing: 03.03.87

(54) **Preservative compositions and uses thereof.**

(30) Priority: 04.03.86 US 836130

(43) Date of publication of application: 09.09.87 Bulletin 87/37

(45) Publication of the grant of the patent: 19.09.90 Bulletin 90/38

(84) Designated Contracting States: AT BE CH DE ES FR GB GR IT LI LU NL SE

(56) References cited: WO-A-81/00188

(73) Proprietor: SUTTON LABORATORIES, INC., 116 Summit Avenue, Chatham, NJ 07928(US)

(72) Inventor: Berke, Philip A., 95 Green Avenue, Madison New Jersey 07940(US)
Inventor: Rosen, William E., 86 Canoe Brook Parkway, Summit New Jersey 07901(US)

(74) Representative: Woodman, Derek et al, FRANK B. DEHN & CO. Imperial House 15-19 Kingsway, London WC2B 6UZ(GB)

EP 0 236 119 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### Technical Field of the Invention

This invention is directed to compositions of matter containing a hydroxymethylaminoacetic acid derivative and one or more 3-isothiazolone compounds and their use to kill microorganisms and to inhibit microbial growth.

#### Description of the Prior Art

Hydroxymethylaminoacetic acid, its salts and lower alkyl esters, are known to be effective antimicrobial agents. Sodium hydroxymethylaminoacetate (CTFA Adopted Name: Sodium Hydroxymethylglycinate) is the active ingredient in the antimicrobial product marketed under the trademark Suttocide® A.

United States Patents 4,105,431 and 4,252,694, disclose a group of compounds generally referred to as 3-isothiazolones, having biocidal properties. Kathon® is the trademark for a family of biocides containing these compounds as active ingredients. More specifically, the Kathon® biocides contain an aqueous mixture of 5-chloro-2-methyl-4-isothiazolin-3-one and 2-methyl-4-isothiazolin-3-one in various weight ratios between about 2:1 and 4:1, respectively, with magnesium salts added as stabilizers. Kathon® formulations have been proposed by the manufacturer for use as a biocide in various industrial applications, such as in cooling-tower water, metalworking fluids, latex emulsions and for slime control in paper mills. They have also been proposed as a biocide for swimming pool water and as an antimicrobial preservative for .toiletries, cosmetics and household cleaning products. However, a significant drawback to the 3-isothiazolone compounds is their high toxicity, particularly their high corrosiveness and skin sensitizing properties.

### SUMMARY OF THE INVENTION

We have discovered that the combination of a hydroxymethylaminoacetic acid derivative with one ore more biocidal 3-isothiazolones exhibits synergistic biocidal and antimicrobial activity against a wide range of microorganisms.

The synergistic combination has a wide range of applications, including all areas where the Kathon® family of biocides and preservatives are currently employed. The synergistic combination, advantageously, provides greater effectiveness, reduced costs and lower toxicological exposure of workers and consumers to the severe skin sensitizing properties of the 3-isothiazolones.

Accordingly, it is a primary object of the invention to provide a composition of matter comprising (i) hydroxymethylaminoacetic acid, its salts or lower alkyl esters and (ii) one or more compounds of the formula (I):

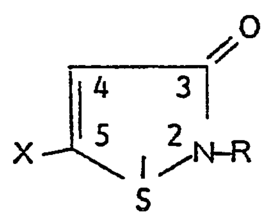

(I)

wherein R is a lower alkyl group, preferably methyl, and X is hydrogen or a halogen, preferably chlorine. By incorporating an effective amount of this composition into a substance requiring microbial inhibition, the substance can be protected against a variety of microorganisms including bacteria, yeast and mold.

### DETAILED DESCRIPTION OF THE PREFERRED EMBODIMENTS

The hydroxymethylaminoacetic acid component of the composition of the invention is prepared as described in U.S. Patent 4,337,269, the disclosure of which is hereby incorporated by reference. As described therein, in preparing this component, a mixture of glycine and a basic reagent, such as an alkali metal hydroxide, is prepared and mixed with formaldehyde in a molar ratio of glycine to formaldehyde of about 1:1. To obtain a salt other than the alkali metal salt, a compound which will cause replacement of the alkali metal cation is added to the reaction mixture. In this manner, numerous salts can be prepared including aluminum hydroxymethylaminoacetate, calcium hydroxymethylaminoacetate, magnesium hydroxymethylaminoacetate, copper hydroxymethylaminoacetate and zinc hydroxymethylaminoacetate. When alkyl glycinates are reacted in place of glycine, alkyl hydroxymethylaminoacetates are produced. Of these esters, lower alkyl esters, e.g., methyl hydroxymethylaminoacetate are most preferred.

After the reaction is complete, an equilibrium mixture of reaction products is obtained as a relatively clear, aqueous solution. The final form of the product may be a solution or a crystalline powder which is readily dissolved in aqueous media.

The 3-isothiazolones used in the composition of the invention are prepared as described in the prevously cited U.S. Patents 4,252,694 and 4,105,431, the disclosures of which are hereby incorporated by reference. As described therein, these compounds can be prepared by the cyclization of a substituted disulfide-amide having the formula (II):

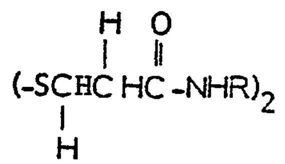

(II)

where R is as previously defined. The cyclization is accomplished by reacting the disulfide-amide with a halogenating agent. Any halogenating agent may be employed in this reaction. Typical halogenating agents include chlorine, bromine, sulfuryl chloride, sulfuryl bromide, N-chlorosuccinimide, N-bromosuccinimide, iodine monochloride, etc. Bromine and chlorine are preferred halogenating agents. Cyclization of the disulfide-amide will take place when 3 mole equivalents of halogenating agent are employed in the reaction. The cyclization reaction is typically carried out at a temperature in the range 0 to 100°C in an inert, non-aqueous solvent, such as benzene, toluene, xylene, ethyl acetate, or ethylene dichloride. When R is methyl in the disulfide-amide reactant of formula (II), 2-methyl-4-isothiazolin-3-one is obtained. By providing an excess of halogenating agent, the isothiazolone can be halogenated at the 5-position, giving 5-chloro-2-methyl-4-isothiazolin-3-one, when the halogenating agent is chlorine.

The 3-isothiazolones present in the Kathon® formulations are aqueous mixtures of 5-chloro-2-methyl-4-isothiazolin-3-one and 2-methyl-4-isothiazolin-3-one. These compounds are present in ratios, by weight, between 2:1 and 4:1 as the active ingredients in the formulations. The formulations additionally contain magnesium salts, such as magnesium nitrate and magnesium chloride, as stabilizers, and water.

Synergism between two antimicrobials is exhibited when the observed activity of the combination is greater than the expected additive activity of the two separate antimicrobials. We have discovered that the combination of our Suttocide® A formulation which is an aqueous solution of sodium hydroxymethylaminoacetate with a Kathon® formulation exhibits synergism in both microbial inhibition and microbiocidal activity. The synergistic acitivity appears in Suttocide® to Kathon® ratios, by weight, from less than 2:1 to approximately 60:1. Because the Kathon® formulations are highly diluted with water and magnesium salts, the actual ratio of active ingredients in the combination of Suttocide® A and Kathon® will be much higher, on the order of approximately 100:1 to 4000:1.

The examples which follow report our experiments carried out with a Kathon® formulation identified as Kathon® CG (cosmetic grade), a popular formulation used as a preservative in cosmetics and toiletries, and Suttocide® A. The composition of Kathon® CG is:

| | |
|---|---|
| **Active ingredients** | |
| 5-chloro-2-methyl-4-isothiazolin-3-one | 1.15% |
| 2-methyl-4-isothiazolin-3-one | 0.35% |
| **Inert Ingredients** | |
| Magnesium salts | 23.0% |
| Water | 75.5% |
| | 100.0% |

Suttocide® A is sodium hydroxymethylaminoacetate (100% active ingredient).

The results reported are considered to be applicable to all Kathon® formulations, since the active ingredients are the same, as well as formulations based upon other isothiazolones of formula (I) in combination with Suttocide A or other hydroxymethylaminoacetic acid derivatives previously described.

EXAMPLE 1

A minimum inhibitory concentration was determined for each component and their combination versus the following challenge inocula:

Pseudomonas aeruginosa ATCC # 9027
Candida albicans ATCC # 10231
Aspergillus niger ATCC # 16404

Each sample series was diluted 1:1 using 5 mls. of Trypticase Soy Broth and 5 mls. of product. The same procedure was used to prepare the yeast and mold challenge samples except the dilution broth used was Sabouraud Dextrose Broth. All diluted samples were then inoculated using 0.1 ml of each challenge inocula. All tubes were incubated at 37°C for 24 to 48 hours and then examined for turbidity. The "MIC" for each product is the last clear tube before the first tube showing turbidity.

Table I lists minimum inhibitory concentrations (MIC) of Suttocide® A (100% basis) and Kathon® CG (1.5% solution) for a gramnegative bacterium, Pseudomonas aeruginosa (ATCC No. 9027), a yeast Candida albicans (ATCC No. 10231), and a mold, Aspergillus niger (ATCC No. 16404). MICs are the minimum concentrations at which each antimicrobial or combination prevents growth of microorganisms. A combination of half the amount of Suttocide® A plus half the amount of Kathon® CG would be expected to be the minimum required level needed to inhibit growth if the activities are additive. If combination quantities containing less than half of each are inhibiting, it demonstrates greater than expected activity, and therefore synergism between the two antimicrobials.

Table I Minimum Inhibitory Concentrations (all concentrations in ppm)

| | P.aeruginosa (ATCC 9027) | C. albicans (ATCC 10231) | A. niger (ATCC 16404) |
|---|---|---|---|
| Suttocide(R) A (100% active ingredient) | 313 | 1250 | 313 |
| Kathon(R) CG (1.5% active ingredient) | > 333 | 42 | 21 |
| Expected MIC (half concentrations) Suttocide(R) A/ Kathon(R) CG | 157/>167 | 625/21 | 157/11 |
| Observed MIC Suttocide(R) A/ Kathon(R) CG | 157/83 | 157/21 | 157/0.67 or 79/1.33 |

The data recorded in Table I demonstrates that for combinations of the two antimicrobials, the observed MICs for the combinations of Suttocide® A and Kathon® CG was less than the expected MIC's based upon the results for each antimicrobial individually tested reduced to half concentrations. These results for the combination of Suttocide® A and Kathon® clearly demonstrate synergism in the combination.

EXAMPLE 2

A minimum concentration for a killing (biocidal) effect was determined for each component and their combination on E. coli (ATCC # 8739), a coliform bacterium.

The bacteria were cultivated, plated and maintained in Trypticase Soy Broth (TSB) and/or Trypticase Soy Agar (TSA). All bacterial dilutions were done using TSB.

For each compound a set-up entailed a total of 10-12 test tubes with each tube containing 2.5 ml of the appropriate concentration of the compound and 2.5 ml of the appropriate test organism. The concentration of the organism was adjusted to about $10^6$/ml and this was confirmed by standard plate counts.

All test tubes containing compound plus E. coli were then incubated at 37°C for 24, 48, and 72 hrs. After each period of incubation 0.01 ml (10 µl) from each tube was dispensed into appropriate sterile agar plates. The plates were then incubated at 37°C for 24-48 hours and the resulting colonies counted.

The counts were compared with the original counts. This comparison permitted the determination of 97-100% kill for each compound at each concentration tested. Less than 97% kill was reported as growth.

The lowest concentration of compound or combination of compounds for which 97-100% kill occurred was the minimum biocidal concentration (MBC).

The results of this test are recorded in Table II.

Table II Minimum Biocidal Concentrations (all concentrations in ppm)

| | E. coli (ATCC 8739) |
|---|---|
| Suttocide(R) A (100% active ingredient) | 625 |
| Kathon(R) CG (1.5% active ingredients) | 160 |
| Expected MBC(half concentrations) Suttocide(R) A/Kathon(R) CG | 313/80 |
| Observed MBC Suttocide(R) A/Kathon(R) CG | 313/53 |

The results show that the MBC for the combination of Suttocide® A and Kathon® was less than half of each antimicrobial individually tested reduced to half concentrations.

The synergistic microbial inhibiting and biocidal activity of the combination of hydroxymethylaminoacetic acid, its salts and lower alkyl esters and the 3-isothiazolones, has significant practical applications since it allows lesser amounts of the 3-isothiazolone components to be used to achieve an equivalent microbial inhibiting or biocidal effect. This is important since the 3-isothiazolones are notoriously corrosive and highly irritating to skin. Hence, the composition of the present invention can be used in all applications where the 3-isothiazolones, particularly the Kathon® family of products have been proposed, with less toxicities.

Such applications include, but are not limited to, use as an anti microbial preservative in cosmetics, toiletries and household cleaning properties, use as a biocide for synthetic latexes, emulsion paints and other coatings, adhesives, polishes, carpet backing compositions, surfactants, metalworking fluids, industrial and domestic water treatment including cooling tower systems and swimming pools, adhesive mats, drilling mud formulations, painting pastes, spin finish emulsions, polymer dispersions, fuels and in other substances susceptible to contamination by microorganisms. A further important application is as a slimicide for slime control in the manufacture of paper from wood pulp.

The amount of the composition of the invention incorporated into a product will, of course, depend upon the particular product being treated as well as the purpose of the treatment, i.e., preservative or biocide. Generally, amounts to no greater than 1.0%, by weight based upon the weight of the product, of active ingredients will be effective for most uses. However, it is understood that due to the diversity in applications in which the composition may be used, this weight percentage is not an absolute maximum.

The composition of the invention may be incorporated into a product requiring antimicrobial protection by pre-mixing the individual components, e.g., Suttocide® A and Kathon®, in a common carrier and then incorporating the pre-mixed composition into the product or by incorporating the individual components into the product separately. The invention, therefore, contemplates both pre-mixed compositions containing the antimicrobial components as well as compositions which are prepared only as part of the formulation of a product requiring antimicrobial protection. In either case, the preferred compounds and weight ratios of these compounds to one another are the same. In particular, the combination of sodium hydroxymethylaminoacetate with 5-chloro-2-methyl-4-isothiazolin-3-one and 2-methyl-4-isothiazolin-3-one in which the weight ratio of 5-chloro-2-methyl-4-isothiazolin-3-one to 2-methyl-4-isothiazolin-3-one is between about 2:1 and 4:1 is most preferred. This combination is obtained by formulating the product to be preserved with effective amounts of Suttocide® A (sodium hydroxymethylaminoacetate) and any one of the numerous Kathon® formulations.

**Claims for the Contracting States: AT, BE, CH, DE, FR, GB, GR, IT, LI, LU, NL, SE**

1. A composition of matter comprising (i) a compound selected from the group consisting of hydroxymethylaminoacetic acid, its salts and its lower alkyl esters and (ii) one or more compounds of the formula (I):

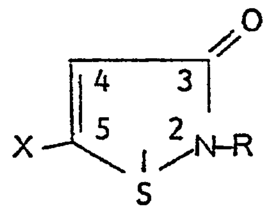

(I)

wherein R is a lower alkyl group and X is hydrogen or a halogen.

2. A composition as claimed in claim 1, wherein said compound (i) is a member selected from the group consisting of sodium hydroxymethylaminoacetate, potassium hydroxymethylaminoacetate, aluminum hydroxymethylaminoacetate, calcium hydroxymethylaminoacetate, magnesium hydroxymethylaminoacetate, copper hydroxymethylaminoacetate, zinc hydroxymethylaminoacetate, methyl hydroxymethylaminoacetate and hydroxymethylaminoacetic acid.

3. A composition as claimed in claim 2 wherein said compound (i) is sodium hydroxymethylaminoacetate.

4. A composition as claimed in any one of the preceding claims wherein said one or more compounds of formula (I) are members selected from the group consisting of 5-chloro-2-methyl-4-isothiazolin-3-one, 2-methyl-4-isothiazolin-3-one and mixtures thereof.

5. A composition as claimed in claim 4 containing 5-chloro-2-methyl-4-isothiazolin-3-one and 2-methyl-4-isothiazolin-3-one in a ratio, by weight, between about 2:1 and 4:1.

6. A composition as claimed in claim 5 containing, as compound (i), sodium hydroxymethylaminoacetate wherein the ratio, by weight,of sodium hydroxymethylaminoacetate to the sum of 5-chloro-2-methyl-4-isothiazolin-3-one and 2-methyl-4-isothiazolin-3-one is greater than about 100:1 and less than about 4000:1.

7. A composition as claimed in any one of the preceding claims further comprising magnesium salts and water.

8. A method for inhibiting microbial growth in a substance comprising incorporating into the substance an effective microbial growth inhibiting amount of a composition as claimed in any one of the preceding claims.

9. A preserved product comprising an effective microbial growth inhibiting amount of a composition as claimed in any one of claims 1 to 7.

10. A method for killing microorganisms comprising contacting said microorganisms with an effective biocidal amount of a composition as claimed in any one of the claims 1 to 7.

11. Use of a composition as claimed in any one of claims 1 to 7 in the inhibition of microbial growth and/or for killing microorganisms.

12. Use of (i) a compound selected from the group consisting of hydroxymethylaminoacetic acid, its salts and its lower alkyl esters and (ii) one or more compounds of formula (I) as defined in claim 1 in the preparation of a composition as claimed in any one of claims 1 to 7 for use in the inhibition of microbial growth and/or in the killing of microorganisms.

**Claims for the Contracting State: ES**

1. A method of preparing a composition of matter comprising (i) a compound selected from the group consisting of hydroxymethylaminoacetic acid, its salts and its lower alkyl esters and (ii) one or more compounds of the formula (I):

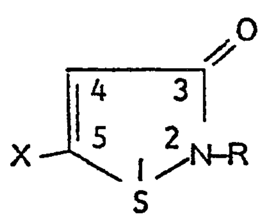

(I)

wherein R is a lower alkyl group and X is hydrogen or a halogen wherein a compound (i) and one or more compounds (ii) are brought into association.

2. A method as claimed in claim 1, wherein said compound (i) is a member selected from the group consisting of sodium hydroxymethyaminoacetate, potassium hydroxymethylaminoacetate, aluminium hydroxymethylaminoacetate, calcium hydroxymethylaminoacetate, magnesium hydroxymethylaminoacetate, copper hydroxymethylaminoacetate, zinc hydroxymethylaminoacetate, methyl hydroxymethylaminoacetate and hydroxymethylaminoacetic acid.

3. A method as claimed in claim 2 wherein said compound (i) is sodium hydroxymethylaminoacetate.

4. A method as claimed in any one of the preceding claims wherein said one or more compounds of formula (I) are members selected from the group consisting of 5-chloro-2-methyl-4-isothiazolin-3-one, 2-methyl-4-isothiazolin-3-one and mixtures thereof.

5. A method as claimed in claim 4 wherein said composition contains 5-chloro-2-methyl-4-isothiazolin-3-one and 2-methyl-4-isothiazolin-3-one in a ratio, by weight, between about 2:1 and 4:1.

6. A method as claimed in claim 5 wherein said composition contains, as compound (i), sodium hydroxymethylaminoacetate wherein the ratio, by weight, of sodium hydroxymethylaminoacetate to the sum of 5-chloro-2-methyl-4-isothiazolin-3-one and 2-methyl-4-isothiazolin-3-one is greater than about 100:1 and less than about 4000:1.

7. A method as claimed in any one of the preceding claims wherein said composition further comprises magnesium salts and water.

8. A method for inhibiting microbial growth in a substance comprising incorporating into the substance an effective microbial growth inhibiting amount of a composition defined in any one of the preceding claims.

9. A method for killing microorganisms comprising contacting said microorganisms with an effective biocidal amount of a composition as defined in any one of claims 1 to 7.

10. Use of a composition as defined in any one of claims 1 to 7 in the inhibition of microbial growth and/or for killing microorganisms.

11. Use of (i) a compound selected from the group consisting of hydroxymethylaminoacetic acid, its salts and its lower alkyl esters and (ii) one or more compounds of formula (I) as defined in claim 1 in the preparation of a composition as defined in any one of claims 1 to 7 for use in the inhibition of microbial growth and/or in the killing of microorganisms.

**Patentansprüche für die Vertragsstaaten: AT, BE, CH, DE, FR, GB, GR, IT, LI, LU, NL, SE,**

1. Eine Stoffzusammensetzung mit (i) einer Verbindung, die aus der Gruppe ausgewählt ist, die aus Hydroxymethylaminoessigsäure, ihren Salzen und ihren niedrigeren Alkylestern besteht, und (ii) einer oder mehreren Verbindungen der Formel (I):

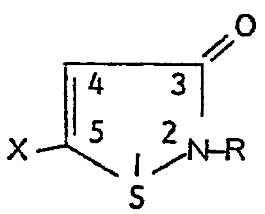

(I)

worin R eine niedrigere Alkylgruppe und X Wasserstoff oder ein Halogen ist.

2. Zusammensetzung nach Anspruch 1, dadurch gekennzeichnet, daß die Verbindung (i) ein Stoff ist, der aus der Gruppe ausgewählt ist, die aus Natrium-Hydroxymethylaminoacetat, Kalium-Hydroxymethylaminoacetat, Aluminium-Hydroxymethylaminoacetat, Calcium-Hydroxymethylaminoacetat, Magnesium-Hydroxymethylaminoacetat, Kupfer-Hydroxymethylaminoacetat, Zink-Hydroxymethylaminoacetat, Methyl-hydroxymethylaminoacetat und Hydroxymethylaminoessigsäure besteht.

3. Zusammensetzung nach Anspruch 2, dadurch gekennzeichnet, daß die Verbindung (i) Natrium Hydroxymethylaminoacetat ist.

4. Zusammensetzung nach einem der vorangehenden Ansprüche, dadurch gekennzeichnet, daß die eine oder die mehreren Verbindungen der Formel (I) Verbindungen sind, die aus der Gruppe ausgewählt sind, die aus 5-Chloro-2-methyl-4-isothiazolin-3-on, 2-Methyl-4-isothiazolin-3-on und Mischungen davon besteht.

5. Zusammensetzung nach Anspruch 4, dadurch gekennzeichnet, daß sie 5-Chloro-2-methyl-4-isothiazolin-3-on und 2-Methyl-4-isothiazolin-3-on in einem Gewichtsverhältnis zwischen etwa 2:1 und 4:1 enthält.

6. Zusammensetzung nach Anspruch 5, dadurch gekennzeichnet, daß sie als Verbindung (i) Natrium-Hydroxymethylaminoacetat enthält, daß das Gewichtsverhältnis von Natrium-Hydroxyaminoacetat zu der Summe von 5-Chloro-2-methyl-4-isothiazolin-3-on und 2-Methyl-4-isothiazolin-3-on größer ist als etwa 100:1 und weniger als etwa 4000:1.

7. Zusammensetzung nach einem der vorangehenden Ansprüche, dadurch gekennzeichnet, daß sie weiterhin Magnesiumsalze und Wasser enthält.

8. Verfahren zur Inhibierung von mikrobiellem Wachstum in einer Substanz, dadurch gekennzeichnet, daß in eine Substanz eine effektive, das mikrobielle Wachstum inhibierende Menge einer Zusammensetzung gemäß einem der vorangehenden Ansprüche eingebracht wird.

9. Konserviertes Produkt mit einer effektiven, das mikrobielle Wachstum inhibierenden Menge einer Zusammensetzung gemäß einem der Ansprüche 1 bis 7.

10. Verfahren zum Töten von Mikroorganismen, dadurch gekennzeichnet, daß die Mikroorganismen mit einer effektiven bioziden Menge einer Zusammensetzung gemäß einem der Ansprüche 1 bis 7 kontaktiert werden.

11. Verwendung einer Zusammensetzung nach einem der Ansprüche 1 bis 7 zur Inhibition des mikrobiellen Wachstums und/oder zum Töten von Mikroorganismen.

12. Verwendung von (i) einer Verbindung, die aus der Gruppe ausgewählt ist, die aus Hydroxymethylaminoessigsäure, ihren Salzen und ihren niedrigeren Alkylestern besteht, und (ii) einer oder mehreren Verbindungen der Formel (I), die in Anspruch 1 definiert ist, für die Herstellung einer Zusammensetzung nach einem der Anprüche 1 bis 7 zur Verwendung bei der Inhibition von mikrobiellem Wachstum und/oder zum Töten von Mikroorganismen.

**Patentansprüche für den Vertragsstaat: ES**

1. Verfahren zur Herstellung einer Stoffzusammensetzung, die (i) eine Verbindung, die aus der Gruppe ausgewählt ist, die aus Hydroxymethylaminoessigsäure, ihren Salzen und ihren niedrigeren Alkylestern besteht, und (ii) eine oder mehrere Verbindungen der Formel (I) enthält:

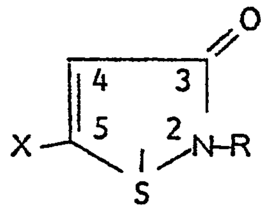

(I)

worin R eine niedrigere Alkylgruppe und X Wasserstoffatom oder ein Halogen ist, dadurch gekennzeichnet, daß eine Verbindung (i) und eine oder mehrere Verbindungen (ii) zusammengebracht werden.

2. Verfahren nach Anspruch 1, dadurch gekennzeichnet, daß die Verbindung (i) eine Verbindung ist, die aus der Gruppe ausgewählt ist, die aus Natrium-Hydroxymethylaminoacetat, Kalium-Hydroxymethylaminoacetat, Aluminium-Hydroxymethylaminoacetat, Calcium-Hydroxymethylaminoacetat, Magnesium-Hydroxymethylaminoacetat, Kupfer-Hydroxymethylaminoacetat, Zink-Hydroxymethylaminoacetat, Methyl-hydroxymethylaminoacetat und Hydroxymethylaminoessigsäure besteht.

3. Verfahren nach Anspruch 2, dadurch gekennzeichnet, daß die Verbindung (i) Natrium-Hydroxymethylaminoacetat ist.

4. Verfahren nach einem der vorangehenden Ansprüche, dadurch gekennzeichnet, daß die eine oder die mehreren Verbindungen der Formel (I) Verbindungen sind, die aus der Gruppe ausgewählt sind, die aus 5-Chloro-2-methyl-4-isothiazolin-3-on, 2-Methyl-4-isothiazolin-3-on und Mischungen davon besteht.

5. Verfahren nach Anspruch 4, dadurch gekennzeichnet, daß die Zusammensetzung 5-Chloro-2-methyl-4-isothiazolin-3-on und 2-Methyl-4-isothiazolin-3-on in einem Gewichtsverhältnis zwischen etwa 2:1 und 4:1 enthält.

6. Verfahren nach Anspruch 5, dadurch gekennzeichnet, daß die Zusammensetzung als Verbindung (i) Natrium-Hydroxymethylaminoacetat enthält, und daß das Gewichtsverhältnis von Natrium-Hydroxymethylaminoacetat zu der Summe von 5-Chloro-2-methyl-4-isothiazolin-3-on und 2-Methyl-4-isothiazolin-3-on größer ist als etwa 100:1 und kleiner ist als etwa 4000:1.

7. Verfahren nach einem der vorangehenden Ansprüche, dadurch gekennzeichnet, daß die Zusammensetzung weiterhin Magnesiumsalze und Wasser enthält.

8. Verfahren zur Inhibition von mikrobiellem Wachstum in einer Substanz, dadurch gekennzeichnet, daß in die Substanz eine effektive, das mikrobielle Wachstum inhibierende Menge einer Zusammensetzung gegeben wird, die in einem der vorangehenden Ansprüche definiert ist.

9. Verfahren zum Töten von Mikroorganismen, dadurch gekennzeichnet, daß die Mikroorganismen mit einer effektiven bioziden Menge einer Zusammensetzung, die in einem der Ansprüche 1 bis 7 definiert ist, in Kontakt gebracht werden.

10. Verwendung einer Zusammensetzung nach einem der Ansprüche 1 bis 7 für die Inhibition von mikrobiellem Wachstum und/oder zum Töten von Mikroorganismen.

11. Verwendung von (i) einer Verbindung, die aus der Gruppe ausgewählt ist, die aus Hydroxymethylaminoessigsäure, ihren Salzen und ihren niedrigeren Alkylestern besteht, und (ii) einer oder mehreren Verbindungen der Formel (I) die in Anspruch 1 definiert ist, für die Herstellung einer Zusammensetzung nach einem der Anprüche 1 bis 7 für die Verwendung zur Inhibition von mikrobiellem Wachstum und/oder zum Töten von Mikroorganismen.

**Revendications pour les Etats Contractants: AT, BE, CH, DE, FR, GB, GR, IT, LI, LU, NL, SE**

1. Une composition de matière comprenant (i) un composé choisi parmi l'acide hydroxyméthylaminoacétique, ses sels et ses esters d'alkyles inférieurs et (ii) un ou plusieurs composés de formule (I):

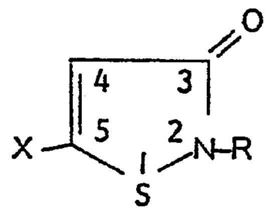

(I)

dans laquelle R est un groupe alkyle inférieur et X est l'hydrogène ou un halogène.

2. Une composition selon la revendication 1, dans laquelle ledit composé (i) est choisi parmi les suivants: hydroxyméthylaminoacétate de sodium, hydroxyméthylaminoacétate de potassium, hydroxyméthylaminoacétate d'aluminium, hydroxyméthylaminoacétate de calcium, hydroxyméthylaminoacétate de magnésium, hydroxyméthylaminoacétate de cuivre, hydroxyméthylaminoacétate de zinc, hydroxyméthylaminoacétate de méthyle et acide hydroxyméthylaminoacétique.

3. Une composition selon la revendication 2, dans laquelle ledit composé (i) est l'hydroxyméthylaminoacétate de sodium.

4. Une composition selon l'une quelconque des revendications précédentes, dans laquelle le(s) dit(s) composé(s) de formule (I) est (sont) choisi(s) parmi la 5-chloro-2-méthyl-4-isothiazoline-3-one, la 2-méthyl-4-isothiazoline-3-one et leurs mélanges.

5. Une composition selon la revendication 4, contenant la 5-chloro-2-méthyl-4-isothiazoline-3-one et la 2-méthyl-4-isothiazoline-3-one dans un rapport pondéral compris entre environ 2 : 1 et 4 : 1.

6. Une composition selon la revendication 5, contenant comme composé (i) l'hydroxyméthylaminoacétate de sodium, dans laquelle le rapport pondéral de l'hydroxyméthylaminoacétate de sodium à la somme de la 5-chloro-2-méthyl-4-isothiazoline-3-one et de la 2-méthyl-4-isothiazoline-3-one est supérieur à environ 100: 1 et inférieur à environ 4 000 : 1.

7. Une composition selon l'une quelconque des revendications précédentes, comprenant en outre des sels de magnésium et de l'eau.

8. Un procédé pour inhiber la croissance microbienne dans une substance, consistant à incorporer dans la substance une quantité efficace inhibant la croissance microbienne d'une composition selon l'une quelconque des revendications précédentes.

9. Un produit protégé comprenant une quantité efficace inhibant la croissance microbienne d'une composition selon l'une quelconque des revendications 1 à 7.

10. Un procédé pour tuer les micro-organismes, consistant à mettre en contact lesdits micro-organismes avec une quantité biocide efficace d'une composition selon l'une quelconque des revendications 1 à 7.

11. Utilisation d'une composition selon l'une quelconque des revendications 1 à 7 pour inhiber la croissance microbienne et/ou pour tuer les micro-organismes.

12. Utilisation de (i) un composé choisi parmi l'acide hydroxyméthylaminoacétique, ses sels et ses esters d'alkyles inférieurs et (ii) un ou plusieurs composés de formule (I) telle que définie à la revendication 1 dans la préparation d'une composition selon l'une quelconque des revendications 1 à 7 pour l'utilisation pour inhiber la croissance microbienne et/ou pour tuer les micro-organismes.

**Revendications pour l'Etat Contractant: ES**

1. Un procédé de préparation d'une composition de matière comprenant (i) un composé choisi parmi l'acide hydroxyméthylaminoacétique, ses sels et ses esters d'alkyles inférieurs et (ii) un ou plusieurs composés de formule (I):

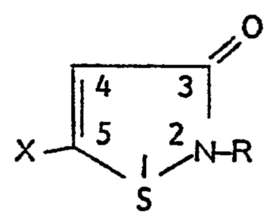

(I)

dans laquelle R est un groupe alkyle inférieur et X est l'hydrogène ou un halogène, dans lequel on met en association un composé (i) et un ou plusieurs composés (ii).

2. Un procédé selon la revendication 1, dans lequel ledit composé (i) est choisi parmi les suivants: hydroxyméthylaminoacétate de sodium, hydroxyméthylaminoacétate de potassium, hydroxyméthylaminoacétate d'aluminium, hydroxyméthylaminoacétate de calcium, hydroxyméthylaminoacétate de magnésium, hydroxyméthylaminoacétate de cuivre, hydroxyméthylaminoacétate de zinc, hydroxyméthylaminoacétate de méthyle et acide hydroxyméthylaminoacétique.

3. Un procédé selon la revendication 2, dans lequel ledit composé (i) est l'hydroxyméthylaminoacétate de sodium.

4. Un procédé selon l'une quelconque des revendications précédentes, dans lequel le(s) dit(s) composé(s) de formule (I) est (sont) choisi(s) parmi la 5-chloro-2-méthyl-4-isothiazoline-3-one, la 2-méthyl-4-isothiazoline-3-one et leurs mélanges.

5. Un procédé selon la revendication 4, dans lequel ladite composition contient la 5-chloro-2-méthyl-4-isothiazoline-3-one et la 2-méthyl-4-isothiazoline-3-one dans un rapport pondéral compris entre environ 2 : 1 et 4 : 1.

6. Un procédé selon la revendication 5, dans lequel ladite composition contient comme composé (i) l'hydroxyméthylaminoacétate de sodium, dans lequel le rapport pondéral de l'hydroxyméthylaminoacétate de sodium à la somme de la 5-chloro-2-méthyl-4-isothiazoline-3-one et de la 2-méthyl-4-isothiazoline-3-one est supérieur à environ 100; 1 et inférieur à environ 4 000 : 1.

7. Un procédé selon l'une quelconque des revendications précédentes, dans lequel ladite composition comprend en outre des sels de magnésium et de l'eau.

8. Un procédé pour inhiber la croissance microbienne dans une substance, consistant à incorporer dans la substance une quantité efficace inhibant la croissance microbienne d'une composition selon l'une quelconque des revendications précédentes.

9. Un procédé pour tuer les micro-organismes, consistant à mettre en contact lesdits micro-organismes avec une quantité biocide efficace d'une composition selon l'une quelconque des revendications 1 à 7.

10. Utilisation d'une composition selon l'une quelconque des revendications 1 à 7 pour inhiber la croissance microbienne et/ou pour tuer les micro-organismes.

11. Utilisation de (i) un composé choisi parmi l'acide hydroxyméthylaminoacétique, ses sels et ses esters d'alkyles inférieurs et (ii) un ou plusieurs composés de formule (I) telle que définie à la revendication 1 dans la préparation d'une composition définie à l'une quelconque des revendications 1 à 7 pour l'utilisation pour inhiber la croissance microbienne et/ou pour tuer les micro-organismes.